# EUROPEAN PATENT APPLICATION

(11) **EP 0 548 839 A1**
(43) Date of publication of application: **30.06.1993**
(21) Application number: 92121584.4
(22) Date of filing: 18.12.1992
(51) Int. Cl.: C08F 220/14

(54) **Flame retarded methyl methacrylates**

(30) Priority: 27.12.1991 IL 100540
(71) Applicant: Bromine Compounds Ltd., Beer-Sheva 84101 (IL)
(72) Inventor: Daren, Stephen, Ness Ziona 70400 (IL); Peled, Michael, Beer-Sheva (IL)
(74) Representative: Perani, Aurelio

(57) **Abstract**

A flame-retarded transparent polymeric composition with reduced water uptake comprises methylmethacrylate and at least one bromine-containing monomer selected from pentabromobenzyl acrylate or methacrylate, tribromostyrene and tribromophenylmaleimide, each of the said monomers being present alone or in combination of two or three of the said comonomers.

## Description

### Field of the Invention

The present invention relates to flame retarded plastics compositions with improved optical characteristics. More particularly, the invention relates to poly(methylmethacrylate) copolymers which incorporate flame retardant-imparting comonomers which retain the transparency of the poly(methylmethacrylate) while improving the refractive index. These copolymers are suitable for the automated production of lenses, disks and optical fibers.

### Background of the Invention

Poly(methylmethacrylate), (PMMA), is the polymer of choice for plastic optical fibers, plastic camera lenses and transparent light fittings. The Electronic Industries Association have set a procedure for testing the fire retardance of the plastic jacketing and connectors of optical fibers with glass cores (see Plant Engineering, Feb. 12, 1987). If the glass core is to be replaced by a plastic fiber, then it is highly desirable that the transparent core should also have fire-retarding properties. Likewise, transparent decorative items such as light covers should also be flame-retarded.

All plastic optical components should have as low a water take-up as possible to prevent dimensional distortion and reduction in refractive index. Further refractive indices of 1·60 and above are desired by the optics industry, compared to 1.45 for unmodified poly(methylmethacrylate).

### The Prior Art

Most formulations in the art which specifically claim flame-retardant PMMA are of the additive or filler type which suffer from lack of permanence in the polymer and damage the transparency. Thus, various phosphate esters with or without halogens are widely used as fire-retardant additives. In a Sandoz Research Disclosure, Bill et al. [Sandoz Res. Discl. 232, 270-1 (1983)], 46 halogenated organic phosphorous compounds such as bis(bromomethyl)neopentylglycol cyclic phosphates are described. An active styrylhalophosphate monomer which participates in the polymerization is described by Furukawa et al. [Polym. Preprint 20(1), 551-4 (1979)]. Of the organic bromo additives decabromodiphenylether is claimed to have the highest thermal stability [Jarvis, C.W. et al. Org. Coat. Plast. Chem. 43, 181-8].

Filler-type fire retardant additives for PMMA include magnesium-hydroxide [Japan Kokai Tokyo Koho JP 01203248, 16 August, 1989] and alumina [JP Kokai, Tokyo JP 61051047, 13 March, 1986]. As stated, such additives cannot produce transparent PMMA.

It is known in the art that the bromination of molecules in general and polymers in particular increases the refractive index of the brominated molecule relative to its non-brominated equivalent. Thus the refractive index of styrene is 1·5468 and of bromostyrene 1·5927 - 1·5947 depending on the isomer. Accordingly, bromine-containing molecules are often included as monomers in plastic optical devices to increase the refractive index.

Thus, tribromophenyl methacrylate is included in a formulation for a high refractive index acrylic lens [Jpn. Kokai Tokyo Koho JP 01,198,611, 10 August, 1989]. An MMA copolymer with pentabromophenylmethacrylate was used as the core material in a fiber optics device with good resistance to humidity [Jpn. Kokai Tokyo Koho JP 63,116,108, 20 May, 1988]. An optical disk substrate likewise contained tribromophenyl methacrylate and styrene plus dimethacrylates as cross-linking monomers [Japan Kokai Tokyo Koho JP 63,161,006, 4 July, 1988].

In none of these cases was consideration given to the necessity of flame retardancy. In order to achieve significant improvements in flame retardancy at least 12% bromine by weight is required in the final product. In order to achieve this bromine concentration without significantly changing the basic properties of the PMMA vis a vis transparency and mechanical properties it is necessary to use high bromine content comonomers.

### Summary of the Invention

It is an object of the present invention to provide a flame-retarded poly (methylmethacrylate)-based polymer with increased refractive index and reduced water absorption.

The flame retarded transparent plastic compositions of the invention comprise co- and terpolymers of methylmethacrylate with one or more highly brominated comonomers selected from pentabromobenzylacrylate or methacrylate (PBB-MA), tribromostyrene (TBS) and tribromophenylmaleimide (TBPMI).

According to a preferred embodiment of the invention, the monomeric composition of the copolymer comprises:
- at least 65% by weight MMA;
- up to 35% by weight of PBB-MA, TBS or TBPMI, or mixtures thereof.

Optionally, conventional additives such as chain transfer agents, UV stabilizers and antioxidants may be added. Additionally, trace monomers such as acrylic acid or allyl methacrylate or acrylate, which are common in Pespex technology, can be added, e.g., as cross-linking agents. Various additives and cross-linking agents can be used, depending on whether a thermoplastic or a thermosetting polymer is desired. Selecting suitable additives is within the skill of the man of the art. Such additives are known to persons skilled in the art, and need not be detailed herein.

The compositions of the invention are prepared by mixing MMA monomer with the bromine-containing monomers comprising one or more of PBB-MA, TBS or TBPMI and reacting the same, preferably in the presence of a polymerization initiator, such as benzoyl peroxide, at such a temperature that the monomers react slowly enough to dissipate the heat of polymerization. Representative reaction times are about 1-2 days at 50°-70°C. This time may be somewhat shortened by preprogrammed heating. Likewise, intermittent application of electromagnetic radiation such as UV or microwave will also facilitate the polymerization. These conditions may be easily achieved by persons skilled in the art.

The above and other characteristics and advantages of the invention will be further understood through the following description of illustrative and non-limitative examples.

### Example 1

Methylmethacrylate monomer (Fluka) was passed via a plug of basic alumina to remove inhibitor. Similarly 10% solutions in methylene chloride of PBBMA (Bromine Compounds Ltd.), TBS (Bromine Compounds Ltd.) and TBPMI (Bromine Compounds Ltd.) were passed via basic alumina to remove inhibitors and traces of color. The clear solutions were evaporated to dryness under vacuum at room temperature to achieve inhibitor and color-free monomers. The purified monomers were stored in the dark at room temperature and used within 24 hours of purification.

Solutions of the bromine-containing monomers in methyl methylacrylate purified according to the above, and 0.2 - 0.3% by weight of benzoyl peroxide (recrystallized from methanol) were prepared in 20 ml stoppered glass vials. Approximately 10 mls of each solution were prepared. Some powdered dry ice was added to the vials to displace the air. The lightly stoppered vials were placed in an oven at 55°C on a thermally insulated surface to ensure that the vials were uniformly heated by the air and not from hot-spots on the oven shelf. When the vials had heated up to the oven temperature they were tightly closed and left in the oven for one to two days until complete hardening of the monomers had been achieved. The polymers obtained were hard and clear. The absence of cloudiness is indicative of the total lack of incompatible homopolymers.

The vials were then broken open and hard clear discs of polymer were removed. In this manner, the following clear copolymers (Table I) and terpolymers (Table II) were prepared:

**Table I**

| **Composition No.** | **Weight % of Monomers in Feed.** | | | | **Calculated % Br** | **Reaction Temp. °C** |
|---|---|---|---|---|---|---|
| | **%MMA** | **%PBBMA** | **%TBS** | **%TBPMI** | | |
| 1 | 100 | - | - | - | 0 | 55 |
| 2 | 90 | 10 | - | - | 7.2 | 55 |
| 3 | 85 | 15 | - | - | 10.8 | 55 |
| 4 | 80 | 20 | - | - | 14.4 | 55 |
| 5 | 90 | - | 10 | - | 7.0 | 55 |
| 6 | 85 | - | 15 | - | 10.5 | 55 |
| 7 | 80 | - | 20 | - | 14.0 | 55 |

**Table II**

| **Composition No.** | **%MMA** | **%PBBMA** | **%TBS** | **%TBPMI** | **Calculated %Br** | **Reaction Temp. °C** |
|---|---|---|---|---|---|---|
| 8 | 83.1 | - | 1.5 | 15.4 | 10.1 | 53 |
| 9 | 85.2 | - | 13.1 | 1.7 | 10.2 | 53 |
| 10 | 85.6 | 2.7 | 11.7 | - | 10.1 | 53 |
| 11 | 85.5 | 1.4 | 13.1 | - | 10.2 | 53 |
| 12 | 83.6 | 2.7 | - | 13.7 | 10.0 | 53 |
| 13 | 83.2 | 1.4 | - | 15.4 | 10.0 | 53 |
| 14 | 89.5 | 10.5 | - | - | 7.5 | 57 |
| 15 | 86.8 | 10.1 | - | 3.0 | 9.0 | 57 |
| 16 | 86.8 | 10.1 | 3.1 | - | 9.4 | 57 |
| 17 | 68.3 | 9.5 | - | 22.6 | 20.0 | 55 |
| 18 | 72.0 | 5.0 | 10.0 | 13.0 | 18.2 | 55 |
| 19 | 68.5 | 9.0 | - | 22.5 | 19.6 | 70 |
| 20 | 70.3 | - | 6.3 | 23.4 | 18.1 | 67 |
| 21 | 70.3 | 6.3 | - | 23.4 | 18.2 | 70 |
| 22 | 85.0 | 9.3 | 5.7 | - | 10.7 | 67 |
| 23 | 85.0 | 9.3 | - | 5.7 | 10.0 | 67 |

In the following tests the optical properties of some of the copolymer compositions are compared to those of the methylmethacrylate homopolymer (composition 1).

The requirement is to raise the refractive index of the copolymer relative to the homopolymer with minimal damage to the light transmission.

The transmissions of 5% solutions of copolymers in chloroform were measured in a UV-visible spectrophotometer (Philips PU-8800) against chloroform as reference. The refractive indices were determined by the method of Bauer and Lewin (Physical Methods of Organic Chemistry, Ed. A. Weissberger, Vol. I, pp. 1140-1232, Interscience, NY, 1960) as 4% solutions in butylacetate.

The results are summarized in Table III:

**Table III**

| Optical Properties of MMA - Copolymers | | | |
|---|---|---|---|
| **Composition Number** | **% Transmission of 5% Sol. in Chloroform** | | **Refractive Index of Polymer** |
| | **600 n.m.** | **400 n.m.** | |
| Chloroform | 99 | 98 | |
| 1 (PMMA) | 94.5 | 92.5 | 1.46 |
| 2 " | 92.0 | 87.0 | 1.48 |
| 3 " | 91.5 | 78.5 | 1.50 |
| 4 " | 95.0 | 91.5 | 1.57 |
| 5 " | 95.0 | 92.5 | 1.51 |
| 6 " | 95.0 | 93.0 | 1.58 |
| 7 " | 93.0 | 90 | 1.63 |

Thus, the refractive indices of the bromine-containing copolymers can be made significantly higher than the MMA homopolymer with little or no damage to the optical transmission.

### Water Absorption

Compositions 1, 2 and 5 were tested for water absorption at room temperature according to ASTM D570. After 85 days, the PMMA homopolymer (composition 1) had absorbed 1.6% water by weight, while copolymers 2 and 5 had absorbed only 1.3% by weight, a reduction of 19%.

### Flame Retardance

Compositions 1-7 were crushed to a powder, and then hot-pressed into 3.2 mm sheets. The Limiting Oxygen Index (LOI) and Vertical Burning Rate (VBR) were tested according to ASTM-D-2865-70. The results are shown below.

**Table IV**

| **Composition Number** | **LOI(%O₂)** | **VBR(inches/min)** |
|---|---|---|
| 1 | 17.8 - 18.0 | 13.07 - 15.14 |
| 2 | 19.2 - 19.5 | 9.18 - 11.10 |
| 3 | 20.2 - 20.5 | 7.57 - 11.10 |
| 4 | 20.7 - 21.0 | 6.57 - 7.22 |
| 5 | 19.2 - 19.7 | 8.47 - 10.24 |
| 6 | 20.5 - 20.7 | 7.14 - 7.24 |
| 7 | 22.0 - 22.2 | 6.50 - 6.56 |

The above examples have been provided for the purpose of illustration, and are not intended to limit the invention. Polymeric compositions according to the invention, having good F.R. and optical properties, as well as decreased water absorption can be provided using different proportions of the components and different additives or homologues of the various monomers, all without exceeding the scope of the invention.

## Claims

1. A flame-retarded transparent polymeric composition with reduced water uptake, comprising methylmethacrylate and at least one bromine-containing monomer selected from pentabromobenzyl acrylate or methacrylate, tribromostyrene and tribromophenylmaleimide, each of the said monomers being present alone or in combination of two or three of the said comonomers.

2. A flame-retarded transparent polymeric composition comprising:
- at least 65% weight methylmethacrylate
- up to 35% of bromine-containing comonomers chosen from:
pentabromobenzylacrylate or methacrylate;
tribromostyrenes;
tribromophenylmaleimide; or mixtures thereof,
and, optionally, conventional additives.

3. A composition according to claim 1 or 2, wherein the additives comprise trace monomers.

4. A composition according to claim 3, wherein the trace monomers are cross-linking agents.

5. A process for the preparation of a flame-retarded transparent polymeric composition, comprising copolymerizing methylmethacrylate with one or more bromine-containing comonomer(s) selected from among pentabromobenzylacrylate or methacrylate, tribromostyrenes and tribromophenylmaleimide, preferably in the presence of a polymerization initiator.

6. A process according to claim 3, wherein the polymerization initiator is benzoyl peroxide.

7. A flame-retarded article comprising a composition according to any one of claims 1 to 4.

8. A flame retardant article according to claim 7, said article being an optical element.
